# EUROPEAN PATENT APPLICATION

(11) **EP 2 258 670 A2**
(43) Date of publication of application: **08.12.2010**
(21) Application number: 10010935.4
(22) Date of filing: 28.07.2006
(51) Int. Cl.: C04B 35/111, C04B 35/443, C04B 35/486, C04B 35/14, C04B 35/44

(54) **Method for purifying and producing dense blocks**

(30) Priority: 02.08.2005 US 704718 P
(62) Divisional of application: 06800553.7
(71) Applicant: MOGILEVSKY, Radion, Lake Forest IL 60045 (US)
(72) Inventor: MOGILEVSKY, Radion, Lake Forest IL 60045 (US)
(74) Representative: Müller-Boré & Partner Patentanwälte

(57) **Abstract**

A method for purifying and producing dense uniform blocks of high-melting material such as alumina is provided. The blocks may have a predetermined diameter and form such as a cylindrical shape. A substrate is placed under a plasma torch and alumina particles or other high melting materials are heated and melted by the plasma torch is then deposited onto the substrate as it moves in three independent directions including rotation along its vertical axis, back and forth translation motion along a horizontal axis, and pull down motion along the vertical axis.

## Description

### Cross-reference to Related Applications

This application claims the benefit of priority from U.S. provisional application no. 60/704,718, filed August 2, 2005, which is incorporated by reference in it entirety.

### Field of the Invention

The invention relates generally to production of dense high purity materials to be used in crystal growth processes. Specifically, a method is provided for producing blocks of high purity dense alumina (Al₂O₃) which includes the steps of generating plasma, delivering alumina particles into the plasma, melting the alumina particles, depositing melted particles onto a substrate, forming a layer of the melted aluminum oxide at the surface of the substrate that can be moved into three independent directions (back and forth horizontal movement, rotation movement and vertical pull down) to produce dense alumina blocks. The method may be used to prepare blocks of other high purity dense materials such as aluminum-magnesium spinel, Yttrium aluminum garnet, zirconium oxide and silicon dioxide.

### Background of the Invention

Sapphire (Al₂O₃) is widely used material due to its unique properties. Recently sapphire found its application in production of LED (light emitting diodes). Sapphire crystals are produced utilizing several crystal growth processes such as Czochralski (CZ), Kyropoulos, Heat Exchange Method (HEM), Horizontally Directed Solidification Method (HDSM) and EFG (Stepanov). In these processes, raw material made of Al₂O₃ and referred to "crackles" is loaded into a crucible, melted and the crystal growth process is then initiated. In order to obtain the highest yield of product, it would be highly desirable to load the crucible at the maximum capacity with crackle of the highest purity.

To date, there is no specially designed method to produce crackles of sufficient purity and density to grow sapphire crystals. Sapphire crystal growers are using as crackle material that is either left over from their processes or sapphire crystals grown by a flame fusion method commonly referred to as the Vemuil method. In the Vernuil method, alumina powder is delivered into oxygen-hydrogen flame, melted and deposited on seed crystal. The crystals produced by this method, however, are limited in diameter (up to 1.5") and may be contaminated due to cross contamination from production of colored-gem grade crystals containing different doping elements. Moreover, the Vemuil method is unsafe as it employs flammable mixtures of oxygen and hydrogen.

Accordingly, a method for producing high purity and dense alumina blocks of any predetermined diameter for use as crackle is highly desirable. Moreover, a method for producing blocks of other high purity dense materials such as aluminum-magnesium spinel, yttrium aluminum garnet, zirconium oxide, and silicon dioxide is also highly desirable. The dense high purity blocks prepared by the present invention are useful for any suitable purposes such as crackles to grow crystals and high purity, high density ceramics.

### Summary of the invention

The present invention relates to a method for preparing purified dense products with a predetermined diameter. The blocks may have any desired shape such as a cylindrical shape. Generally, particles of starting material such as alumina are delivered into plasma and are melted using plasma to form melted particles (also referred to as liquid or melt). The melted particles are then deposited onto a deposition substrate. The substrate is located on a support which is part of a mechanism or device that provides three independent movements and means for regulating the movements. When deposited, the melted particles forms a liquid layer on the substrate which then undergoes directional solidification to allow for further purification of the starting materials. If doping materials are used, melted doped material, e.g., melted doped alumina, forms a solid layer on the substrate so as to prevent segregation of the doping material. The method of the present invention is particularly useful for making dense purified alumina blocks and can be extended to prepare purified dense blocks of any desired shape or other high melting point substances such as aluminum-magnesium spinel, yttrium aluminum garnet, zirconium oxide, and silicon dioxide. While any suitable size of particles may be used, generally particles having a particle size ranging from 0.1 um to 500 um are used. The purity level of the purified dense block depends in part on the purity level of the starting material. Purity levels up to 99.999% are achieveable by the method of the present invention.

In one embodiment of the invention, a method for producing a purified dense alumina block of predetermined diameter is provided. The method comprising the steps of: generating plasma; delivering alumina particles into the plasma so as to melt the particles and form a liquid alumina; depositing the liquid alumina onto a deposition substrate and forming a layer of liquid alumina on the surface of the substrate while moving the deposition substrate in three independent directions including rotation along its vertical axis, back and forth translation motion along its horizontal axis, and pull down motion along its vertical axis to produce the purified dense alumina block. While any suitable size of particles may be used, generally the alumina particles have a particle size ranging from 0.1 um to 500 um. The purity level of the purified dense alumina block depends in part on the purity level of the starting material. Purity levels up to 99.999% are achieveable by the method of the present invention. The plasma may be generated by any suitable means, including induction with a high frequency generator.

In another embodiment, a method for producing a purified dense doped alumina block of predetermined diameter is provided. The method comprising the steps of: mixing particles of alumina and doping material to form uniform mixture; generating plasma; delivering the uniform mixture into the plasma so as to melt the particles and form a liquid; depositing the liquid onto a deposition substrate and forming a layer of solid doped alumina while moving the deposition substrate in three independent directions including rotation along its vertical axis, back and forth translation motion along its horizontal axis, and pull down motion along its vertical axis so as to produce the purified dense doped alumina block. While any suitable size of particles may be used, the alumina and doping particles generally have a particle size ranging from 0.1 um to 500 um. The purity level of the purified dense doped alumina block depends in part on the purity levels of the starting alumina and doping materials employed. Purity levels up to 99.999% are achieveable by the method of the present invention. Any suitable doping material may be used, including, without limitation,Ti, Cr, Mn, Ni, Fe, V or a mixture of two or more of the foregoing. The plasma may be generated by any suitable means, including induction with a high frequency generator.

In another embodiment of the invention, a method for producing a purified dense aluminum-magnesium spinel block of predetermined diameter is provided. The method comprising the steps of: generating plasma;
delivering particles of aluminum oxide and magnesium oxide into the plasma so as to melt the particles and form a liquid; depositing the liquid onto a deposition substrate while moving the deposition substrate in three independent directions including rotation along its vertical axis, back and forth translation motion along its horizontal axis, and pull down motion along its vertical axis to produce the purified dense aluminum-magnesium spinel block. While any suitable size of particles may be used, generally the aluminum-magnesium spinel particles have a particle size ranging from 0.1 um to 500 um. The purity level of the purified dense aluminum-magnesium spinel block depends in part on the purity level of the starting material and doping materials if used. Purity levels up to 99.999% are achieveable by the method of the present invention. The plasma may be generated by any suitable means, including induction with a high frequency generator.

In one aspect of this embodiment, the melted particles form a liquid layer when deposited on the surface of the substrate.

In another aspect of this embodiment, the particles further comprise doping material and the melted particles form a solid layer when deposited on the surface of the substrate. Any suitable doping material may be used including, without limitation, Fe, Ni or Co.

In another embodiment of the invention, a method is provided for producing a purified dense zirconium oxide block of predetermined diameter. This method comprises the steps of: generating plasma; delivering zirconium oxide particles into the plasma so as to melt the particles and form a liquid; and depositing the liquid onto a deposition substrate while moving the deposition substrate in three independent directions including rotation along its vertical axis, back and forth translation motion along its horizontal axis, and pull down motion along its vertical axis to produce the purified dense zirconium oxide block. While any suitable size of particles may be used, generally the zirconium oxide particles have a particle size ranging from 0.1 um to 500 um. The purity level of the purified dense zirconium oxide block depends in part on the purity level of the starting zirconium oxide and doping materials if used. Purity levels up to 99.999% are achieveable by the method of the present invention. The plasma may be generated by any suitable means, including induction with a high frequency generator.

In one aspect of this embodiment, the melted zirconium oxide forms a liquid layer when deposited on the surface of the substrate.

In another aspect of this embodiment, the particles further comprise doping material and the melted particles form a solid layer when deposited on the surface of the substrate. Any suitable doping material may be used including, without limitation, Yb, Ce, Er, Mg, Fe, Ca or a mixture of two or more of the foregoing.

In another embodiment of the invention, a method for producing a purified dense silica block of predetermined diameter is provided. The method comprising the steps of: generating plasma; delivering silicon dioxide particles into the plasma so as to melt the particles and form a liquid; depositing the liquid onto a deposition substrate while moving the deposition substrate in three independent directions including rotation along its vertical axis, back and forth translation motion along its horizontal axis, and pull down motion along its vertical axis to produce the purified dense silica block. While any suitable size of particles may be used, generally the silica oxide particles have a particle size ranging from 0.1 um to 500 um. The purity level of the purified dense silicon oxide block depends in part on the purity level of the starting silicon oxide and doping materials if used. Purity levels up to 99.999% are achieveable by the method of the present invention. The plasma may be generated by any suitable means, including induction with a high frequency generator.

In one aspect of this embodiment, the melted silicon dioxide forms a liquid layer when deposited on the surface of the substrate.

In another aspect of this embodiment, the particles further comprise doping material and the melted particles form a solid layer when deposited on the surface of the substrate. Any suitable doping material may be used including, without limitation, Ge, B or P.

In another embodiment of the invention, a method for producing a purified dense Yttrium Aluminum Garnet block of predetermined diameter is provided. The method comprises the steps of: mixing predetermined amounts of alumina powder with yttrium oxide powder to form uniform mixture; generating plasma; delivering the uniform mixture into the plasma so as to melt the particles and form a liquid; depositing the liquid onto a deposition substrate and forming a layer of liquid Yttrium Aluminum Garnet on the surface of the substrate while moving the deposition substrate in three independent directions including rotation along its vertical axis, back and forth translation motion along its horizontal axis, and pull down motion along its vertical axis to produce the purified dense yttrium aluminum garnet block. While any suitable size of particles may be used, generally the alumina particles have a particle size ranging from 0.1 um to 500 um. The purity level of the purified dense yttrium aluminum garnet block depends in part on the purity level of the starting material. Purity levels up to 99.999% are achieveable by the method of the present invention. The plasma may be generated by any suitable means, including induction with a high frequency generator.

In another embodiment of the invention, a method for producing a purified dense doped yttrium aluminum garnet block of predetermined diameter is provided. The method comprises the steps of: mixing predetermined amounts of alumina powder, yttrium oxide powder and doping material to form uniform mixture; generating plasma; delivering the uniform mixture into the plasma so as to melt the particles and form a liquid; depositing the liquid onto a deposition substrate and forming a layer of solid doped Yttrium Aluminum Garnet on the surface of the substrate while moving the deposition substrate in three independent directions including rotation along its vertical axis, back and forth translation motion along its horizontal axis, and pull down motion along its vertical axis to produce the purified dense doped yttrium aluminum garnet block. While any suitable size of particles may be used, the yttrium aluminum garnet and doping particles generally have a particle size ranging from 0.1 um to 500 um. The purity level of the purified dense doped yttrium aluminum garnet block depends in part on the purity level of the starting alumina, yttrium oxide and doping materials employed. Purity levels up to 99.999% are achieveable by the method of the present invention. Any suitable doping material may be used, including, without limitation, Er, Yb, Ho, Cr, Tm, Dy, Sm, Tb, Ce or a mixture of two or more of any of the foregoing.

### Brief description of the drawings

Fig. 1 illustrates a system for producing dense alumina blocks using RF plasma torch with powder delivery system thru the water cooled probe located inside plasma torch.
Fig. 2 illustrates a system for producing dense alumina blocks using RF plasma torch with powder delivery system thru the injector system.

### Detailed description of the invention

Embodiments of the invention provide a method for producing a high purity dense alumina blocks (as well as other high purity dense blocks of other materials) with different diameters using a plasma or a flame from a heat energy supply means, preferably inductively coupled radio-frequency (RF) plasma. High purity alumina blocks produced by this method can be used for any suitable purpose such as raw material (crackles) to grow sapphire crystals utilizing a variety of methods such as Kiropoulos, HEM, Cz, and EFG (Stepanov).
or as high purity, high density ceramics.

Referring to Fig.1, a representative inductively coupled radio-frequency (RF) plasma torch **8** is schematically shown. Plasma torch **8** is mounted on stainless steel water cooled reactor **14.** Typically, the plasma torch **8** is made of water cooled copper sections and protected from discharges by quartz tube **9** placed between plasma torch and induction coil **7** (cut-away shown). Water coolers **5** and **6** are used to cool the plasma torch **8** during plasma generation. The torch is placed inside induction coil **7** that is part of RF generator system (not shown on this schematic drawing). Representative examples of suitable plasma torches are shown in U.S. Patent Nos. 3,401,302 and 5,200, 595 which disclosures are incorporated by reference in their entirety. The choice of a plasma torch does not restrict the generality of the method which can be implemented by any other means for delivering heat energy and creating a temperature suitable to melt alumina and other high-temperature materials. During operation, plasma-generating gases are introduced into the plasma torch and the induction coil **7** generates highfrequency alternating magnetic field which ionizes the gases to generate the plasma **10.** Any suitable plasma-generating gas may be used including, without limitation, air, nitrogen, argon, helium or mixtures thereof with the addition of hydrogen. The particles of high melting materials such as alumina to be melted is delivered through water-cooled probe **4** having water coolers **2** and **3** thru feeding tube **1** from a powder feeder (not shown). Due to the extremely high temperature in the plasma (above 10,000 °C), the particles of alumina or other high melting materials are melted and impurities evaporate. Any suitable size of particles may be used. Generally, particle sizes ranging from 0.1 um to 500 um are used. The melted particles, in the form of a liquid, e.g., liquid alumina, are then deposited onto a substrate **12,** usually made of alumina or other suitable material. The deposited liquid alumina forms a liquid layer (if undoped alumina particles are used) or a solid layer (if -mixture of alumina and doped particles are used) on the substrate surface.

When the melted particles reach the substrate, it may solidify immediately or form a liquid layer on the surface of the substrate which undergoes directional solidification, depending on the position of the substrate to the plasma torch. If the distance between the substrate and the plasma torch is relatively close, the energy of the plasma will heat up the surface of the substrate and keep the deposited melted particles in its liquid state. However, if the distance between the substrate and plasma torch is far enough such that the energy of the plasma is not sufficient to keep the deposited melted particles in a liquid state, the melted particles will immediately solidify on deposit onto the substrate surface. Maintaining the condition of a liquid layer is important to allow for the dual purification (discussed below) of undoped alumina, yttrium aluminum garnet, aluminum magnesium spinel, zirconia and other high melting materials having a melting temperature of 1000°C or greater. In contrast for doped high melting materials, maintaining the uniform distribution of doping material in the highly purified dense block is desired and this is achieved by preventing the formation of a liquid layer on the surface of the substrate. Thus, uniformly mixed particles of a high melting substance, e.g., alumina and doping material, are melted by the plasma torch and the melted particles are deposited onto the substrate where it undergoes immediate solidification on the surface of the substrate. No transport of doping material will occur.

Assuming that undoped alumina was deposited onto the substrate to form a liquid layer, as the liquid directionally solidifies on the substrate, additional purification takes place where the impurities with a distribution coefficient less than one are rejected into the melt from the solid-liquid interface and are further solidified on the outer most part of the block. This part of the block containing impurities can simply be mechanically removed off the block via any suitable means including the use of a diamond saw. The substrate **12** is located on support **13** that allows for rotation along its vertical axis, a reversible horizontal translation movement and pulling down movement along the vertical axis that allows for uniform deposit alumina on substrate to form a dense block of purified alumina **11.** By empirically adjusting the parameters of feeding powder speed, rotation speed, amplitude and speed of horizontal translation, and pulling down speed on device 15 and position of the substrate inside the plasma torch , purified dense blocks of alumina or other high-melting substances having a desired diameter and shape may be produced. These three motions may be generated by any suitable means including the use of motors. In addition to providing alumina blocks of any desired diameter and shape, the method of the invention provides purified blocks by a double purification by the processes of evaporation and directional solidification. Table 1 below lists the impurity levels of the starting alumina and finished alumina blocks produced by the present method. Impurity concentrations before purification (starting material) and after purification (densified blocks) were measured using a Glow Discharge Mass Spectrometer (VG 9000).

Fig. 2 is similar to Fig. 1. Referring to Fig. 2, the powder stored in feeder **16** is fed to the plasma flame **10** thru water cooled injector **17** that is connected to the powder feeder **16.** The injector **17** delivers alumina powder into the plasma flame **10.** All other components of the design are similar to identically numbered components shown and described for Fig. 1.

It has been surprisingly discovered that all three movements during molten alumina (or other high melting material) deposition onto the substrate are needed in order to produce dense uniform blocks of material having high melting temperature (such as alumina) of a desired diameter and shape. Drouart et al EP 1281680A2 (US 631,628 B2) described a method for purifying silica and depositing the silica on an optical fiber preform that employed two movements (rotation and back and forth reversible movement along a horizontal axis). While the reported Drouart method is said to be useful for producing blocks of fused silica, such method does not work for alumina as alumina has a much higher melting point (2050°C) and thermal conductivity and thus cannot be deposited in a controlled and uniform manner onto a perform by the Drouart method as there is a risk of bending and cracking of the resultant product due to thermal stresses.

Ball et all (U.S. patent publications US 20030027055, US 20040050098, US20040025542) described a method of purifying silica and depositing silica on substrates that employed two movements (rotation and pulling down motions). While the reported Ball method is said to be useful for producing substrates of fused silica, and possibly can be used to produce blocks of fused silica, such methods does not work for alumina as alumina has a much higher melting point (2050°C) and thermal conductivity and thus cannot be deposited in a controlled and uniform manner onto substrates by the Ball method. The Ball method produced products of limited diameters, even for producing fused silica, due to the fact that the diameter of deposited substrate is limited by the diameter of the plasma torch which in turn has a diameter in range of 50-100 mm. In contrast, highly purified dense blocks of high melting materials (1000°C and above) of a pre-determined diameter and shape can be surprisingly produced by the method of the claimed invention.

**Table 1**

| | **Example 1** | | **Example 2** | | **Example 3** | |
|---|---|---|---|---|---|---|
| **Element (ppm)** | **Starting Material** | **Densified Block** | **Starting Material** | **Densified Block** | **Starting Material** | **Densified Block** |
| | | | | | | |
| B | 0.20 | 0.01 | 2 | 0.70 | 1 | 0.4 |
| O | matrix | matrix | matrix | Matrix | matrix | matrix |
| Na | 9.80 | 0.40 | 1981 | 150.00 | 697 | 37 |
| Mg | 6.30 | 1.20 | 16 | 1.40 | 32 | 3.4 |
| Al | matrix | matrix | matrix | Matrix | matrix | matrix |
| Si | 15.50 | 0.98 | 65 | 5.60 | 45 | 3.9 |
| P | 1.20 | 0.07 | 2.6 | 0.20 | 1 | 0.09 |
| S | 14.90 | 0.18 | 117 | 11.00 | 42 | 4.1 |
| Cl | 1,150.00 | 0.30 | 234 | 0.21 | 358 | 0.28 |
| Ca | 8.80 | 0.17 | 195 | 12.60 | 138 | 9.8 |
| Ti | 1.00 | 0.05 | 33 | 5.50 | 14 | 2.3 |
| Cr | 2.30 | 0.05 | 28 | 3.20 | 107 | 6.7 |
| Mn | 0.10 | 0.02 | 0.7 | 0.60 | 4 | 0.2 |
| Fe | 4.90 | 0.25 | 111 | 23.00 | 610 | 78 |
| Ni | 0.27 | 0.05 | 26 | 0.80 | 4 | 0.1 |
| Cu | 0.40 | 0.10 | 1.5 | 0.10 | 25 | 0.4 |
| Zn | 0.80 | 0.16 | 40 | 4.40 | 26 | 2.9 |
| Ga | 0.04 | 0.03 | 99 | 6.20 | 163 | 9.8 |
| Zr | 0.54 | 0.07 | 3.5 | 0.60 | 0.25 | 0.02 |
| Nb | 0.12 | 0.01 | 0.1 | 0.10 | 0.2 | 0.02 |
| Mo | 0.50 | 0.20 | 0.5 | 0.25 | 0.2 | 0.1 |
| Hf | 0.60 | 0.12 | 0.5 | 0.30 | 0.5 | 0.3 |
| Ta | sec. cathode | sec. cathode | sec. cathode | sec.cathode | sec. cathode | sec.cathode |
| W | 0.50 | 0.07 | 0.5 | 0.40 | 1 | 0.5 |
| Re | 0.02 | 0.01 | 0.02 | 0.01 | 0.02 | 0.01 |
| Au | 0.04 | 0.02 | 0.02 | 0.02 | 0.06 | 0.04 |
| Pb | 5.80 | 0.20 | 27 | 0.40 | 39 | 0.6 |

## Claims

1. A method for producing a purified dense silica block of predetermined diameter, said method comprising the steps of:
generating plasma;
delivering silicon dioxide particles into the plasma so as to melt the particles; and
depositing the melted particles onto a deposition substrate while moving the deposition substrate in three independent directions including rotation along its vertical axis, back and forth translation motion along its horizontal axis, and pull down motion along its vertical axis to produce the purified dense silica block.

2. The method of claim 1, wherein the silicon dioxide particles have a particle size ranging from 0.1 um to 500 um.

3. The method of claim 1, wherein the plasma is generated by induction with a high frequency generator.

4. The method of claim 1, wherein the purified dense silica block has a purity level up to 99.999%.

5. The method of claim 1, wherein the melted particles form a liquid layer when deposited on the surface of the substrate.

6. The method of claim 1, wherein the particles further comprise doping material and the melted particles form a solid when deposited on the surface of the substrate.

7. The method of claim 6, wherein the doping material comprises Ge, B or P.

8. A method for producing a purified dense Yttrium Aluminum Garnet block of predetermined diameter, said method comprising the steps of:
mixing predetermined amounts of alumina particles with yttrium oxide particles to form uniform mixture;
generating plasma;
delivering the uniform mixture into the plasma so as to melt the particles and form a liquid; and
depositing the liquid onto a deposition substrate while moving the deposition substrate in three independent directions including rotation along its vertical axis, back and forth translation motion along its horizontal axis, and pull down motion along its vertical axis to produce the purified dense yttrium aluminum garnet block.

9. The method of claim 8, wherein the alumina particles and yttrium oxide particles have a particle size ranging from 0.1 um to 500 um.

10. The method of claim 8, wherein the plasma is generated by induction with a high frequency generator.

11. The method of claim 8, wherein the purified dense yttrium aluminum spinel block has a purity level up to 99.999%.

12. The method of claim 8, wherein the melted particles form a liquid layer when deposited on the surface of the substrate.

13. The method of claim 8, wherein the particles further comprise doping material and the melted particles form a solid layer when deposited on the surface of the substrate.

14. The method of claim 13, wherein the doping material comprises Nd, Er, Yb, Ho, Cr, Tm, Dy, Sm, Tb, Ce or a mixture of two or more of any of the foregoing.

15. A method for producing a purified dense block of predetermined diameter, said method comprising the steps of:
generating plasma;
delivering particles of high melting material into the plasma so as to melt the particles and form melted particles, wherein the high melting material has a melting point of 1000°C or greater; and
depositing the melted particles onto a deposition substrate while moving the deposition substrate in three independent directions including rotation along its vertical axis, back and forth translation motion along its horizontal axis, and pull down motion along its vertical axis to produce the purified dense block.

16. The method of claim 15, wherein the particles have a particle size ranging from 0.1 um to 500 um.

17. The method of claim 15, wherein the plasma is generated by induction with a high frequency generator.

18. The method of claim 15, wherein the purified dense block has a purity level up to 99.999%.

19. The method of claim 15, wherein the melted particles form a liquid layer when deposited on the surface of the substrate.

20. The method of claim 15, wherein the particles further comprise doping material and the melted particles form a solid layer when deposited on the surface of the substrate.

21. The method of claim 15, wherein the high melting material has a melting temperature of at least 1000°C.

22. The method of claim 15, wherein the high melting material comprises alumina, aluminium-magnesium spinel, yttrium aluminum garnet, zirconium oxide, and silicon dioxide.
